# EUROPEAN PATENT APPLICATION

(11) **EP 2 332 860 A1**
(43) Date of publication of application: **15.06.2011**
(21) Application number: 09179053.5
(22) Date of filing: 14.12.2009
(51) Int. Cl.: B65G 15/00, B65G 21/06, B65G 21/16

(54) **Self- supporting frame for removable conveyor belts**

(71) Applicant: Vila Torra, Cecilia, 08251 Santpedor (ES)
(72) Inventor: Vila Torra, Cecilia, 08251 Santpedor (ES)
(74) Representative: Carpintero Lopez, Francisco

(57) **Abstract**

Self-supporting frame (1) for extractable conveyor belts (4) composed of a support structure having two end tread rollers, one motorised (2) and another driven (3), whereover the conveyor belt (4) slides, duly guided. The frame structure (1) comprises a plurality of C-shaped transverse/radial supports (7) or elements, structurally joined by means of longitudinal/circumferential crossbeams (18), creating two substructures, an upper cantilevered substructure (10) whereover the conveyor belt (4) slides via the end tread rollers (2,3) and another lower substructure (11) that supports and neutralises the flexion stress caused to the upper substructure (10), in order to release the cantilevered substructure (10) by its inner or lateral end so as to easily extract the conveyor belt (4).

## Description

### OBJECT OF THE INVENTION

The main object of the present invention is a self-supporting frame for extractable conveyor belts, which allows substitution of the damaged belt in a fast and simple manner in order to reduce stop times.

The self-supporting frame that is the object of the invention comprises a superficial cantilevered structure that supports the conveyor belt and allows substitution thereof without difficulty.

### BACKGROUND OF THE INVENTION

At present, the transfer of goods such as packages, bundles or suitcases from one point to another is carried out by means of conveyor belts that configure a run, with straight and curved sections, from the point of origin to the destination point.

Normally, these types of conveyor belts are used in facilities such as airports or goods logistics centres, wherein they are in constant operation, due to which the management of their maintenance and failure repairs must be streamlined in order to reduce transport line stop times.

In fact, substitution of the conveyor belt itself, whether due to wear or breakage, implies a considerable stop in transport line operation, as most of its components must be disassembled in order to access and extract the conveyor belt. In general, the conveyor belt is mounted on a frame having two tread rollers disposed at the ends thereof, whereover the conveyor belt slides. These tread rollers are fixed, by both ends, to the conveyor belt frame in such a manner that, in order to extract the conveyor belt, all of the protection, guiding and tensing elements must previously be disassembled to access the tread roller fastenings. Once the end tread rollers have been released, the conveyor belt can be removed.

Therefore, substitution of the conveyor belt is a complex and painstaking task that requires the intervention of several qualified operators and considerable time, with the ensuing economic loss.

In the state of the art, patent US 20080041702 is known to disclose a rotating support for conveyor belts that allows reduction of belt substitution times, thanks to the articulation thereof on one of its ends. This solution reduces conveyor belt substitution time but also entails certain complexity on having to disassemble certain components in order to rotate the conveyor belt, as it still rests on both ends of the frame.

### DESCRIPTION OF THE INVENTION

The self-supporting frame for extractable conveyor belts proposed by the invention solves the previously expounded problem on allowing substitution thereof in an easy and quick manner, without having to disassemble any component of the conveyor belt unit.

To this end and more specifically, the self-supporting frame for extractable conveyor belts is of the type composed of a support structure having two end tread rollers, one motorised and another rotating, whereover the conveyor belt slides, duly guided by a perimetral projection disposed at one of the ends of the conveyor belt and having an impact protector, in the case of curved conveyor belts. The structure of said frame comprises a plurality of transverse elements or radial in the case of curved belts, the transverse/radial elements of which are joined by the same number of longitudinal or circumferential elements in the case of curved belts, thereby configuring a self-supporting cantilevered structure. This structure consists of two substructures, an upper cantilevered substructure whereover the conveyor belt slides via the end tread rollers and another lower substructure that will support and neutralise the flexion stress caused to the upper substructure, in order to release the cantilevered structure by its inner or lateral end and easily extract the conveyor belt.

The upper face of the cantilevered substructure is sealed by a fixed laminate cover whereover the upper section of the conveyor belt slides. As the cantilevered frame allows extraction of the conveyor belt without having to disassemble its components, the laminate cover does not need to be extracted to access the internal retaining components of the conveyor belt.

Due to being a self-supporting frame it can support itself by means of a structure or elements that rest on the ground, or be suspended from the ceiling by means of the corresponding structure. For such purpose, the lower frame structure has a plurality of orifices destined for coupling the frame support elements. In a preferred embodiment, the support structure or elements for holding the frame are legs that rest on the ground.

The union between the upper cantilevered and lower substructures is carried out by means of C-shaped supports composed of two parallel joining parts that constitute the vertical section of the C-shaped support, wherebetween an upper gusset is disposed, duly fastened, which constitutes the horizontal upper section of the C-shaped support, and a lower strip that constitutes the horizontal lower section of the C-shaped support. Said C-shaped supports are structurally joined together from the outside by their vertical sections, by means of crossbeams having the same geometric shape as the conveyor belt section.

The conveyor belt, in the case of curved belts, is guided through a perimetral projection generally disposed at the outer end of the belt, said projection being retained and guided by roller bearings disposed on the frame. Said roller bearings are protected by an enveloping casing having the same geometric configuration as the frame, in order to prevent the transported articles from banging against the roller bearings, particularly in curved sections. Said enveloping casing, which constitutes the impact protector, has a raising device that allows the passage of the perimetral projection of the conveyor belt for extraction thereof.

Said raising device comprises a plurality of springs, disposed between the frame and the enveloping casing, that push upwards to allow the passage of the projection, and a plurality of retaining pins that maintain it in a contracted position during operation of the conveyor belt, in order to protect the internal roller bearings.

The retaining pins comprise a tilted lateral flange, the pin of which penetrates the frame through the corresponding orifice, which has a notch for the passage of the lateral flange. In this manner, on manually compressing the enveloping protective cover, the pins penetrate their respective retaining orifices, causing the flange to coincide with the notch and, once introduced, are made to rotate so that the tilted lateral flange, on changing its position, retains the enveloping protective cover in its contracted working position.

In order to prevent the lower return run section of the conveyor belt from hanging excessively and rubbing against the lower frame structure, with the ensuing wear and risk, said lower structure comprises a plurality of folding roller bearings for supporting and guiding the lower return run section of the conveyor belt. Said roller bearings are assembled, by means of arms, on rotating axles for folding thereof, in order to facilitate conveyor belt extraction and installation.

### BRIEF DESCRIPTION OF THE DRAWINGS

In order to complement this description and with the object of helping to better understand the characteristics of the invention, a set of drawings, in accordance with a preferred example of practical embodiment thereof, has been included as an integral part of said description, wherein the following have been represented in an illustrative and non-limiting manner:

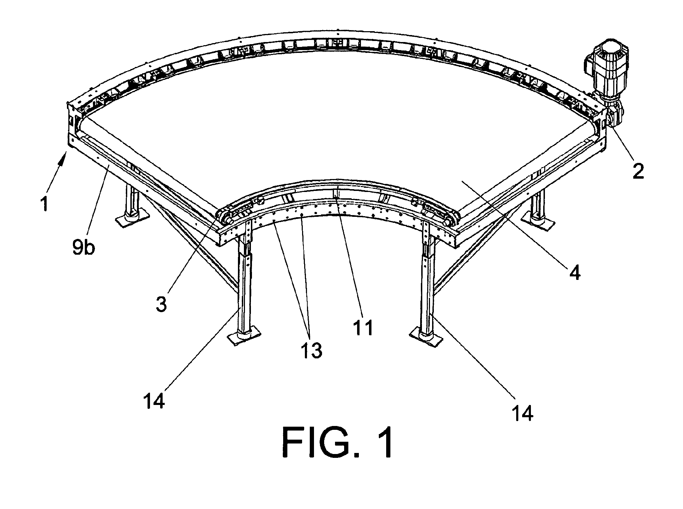

Figure 1 shows a general perspective view of a conveyor belt, built with the self-supporting frame that is the object of the invention, wherein all its constituent components can be observed.
Figure 2 shows a perspective view of the self-supporting frame with the conveyor belt partially extracted, demonstrating the ease with which the substitution operation can be carried out.
Figure 3 shows a perspective view of the self-supporting frame and its conveyor belt duly positioned, in this case for a straight section.

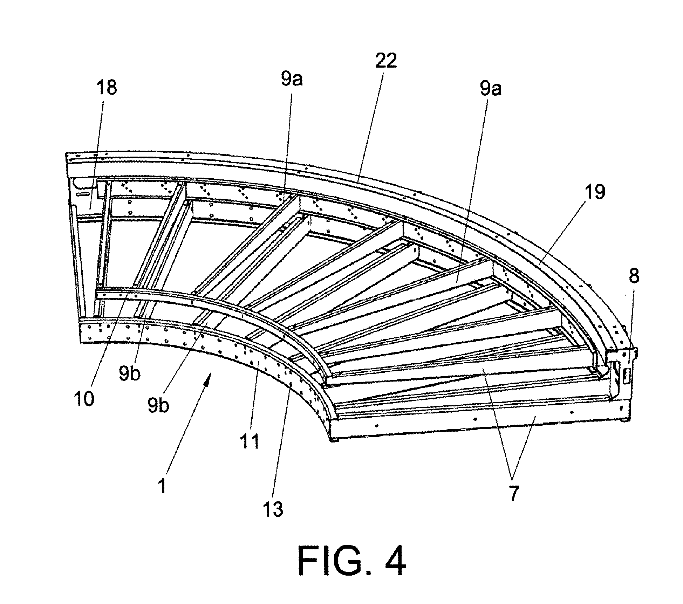

Figure 4 shows a perspective view of the basic self-supporting frame structure.

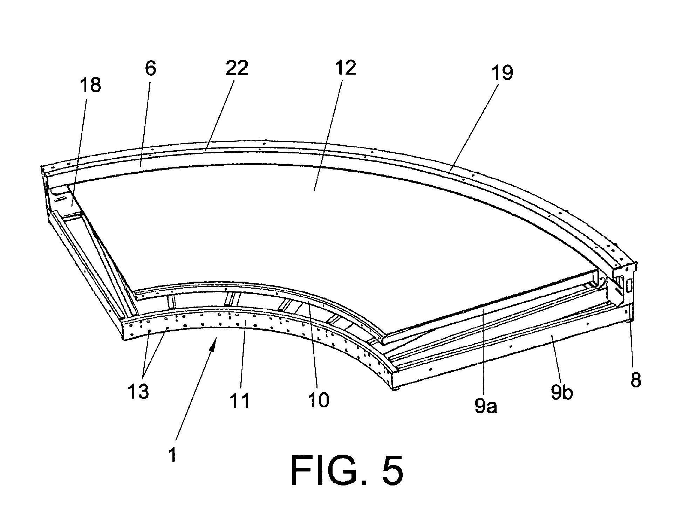

Figure 5 shows a perspective view of the self-supporting frame structure with the laminate cover fixed onto the cantilevered frame structure, whereover the conveyor belt slides.

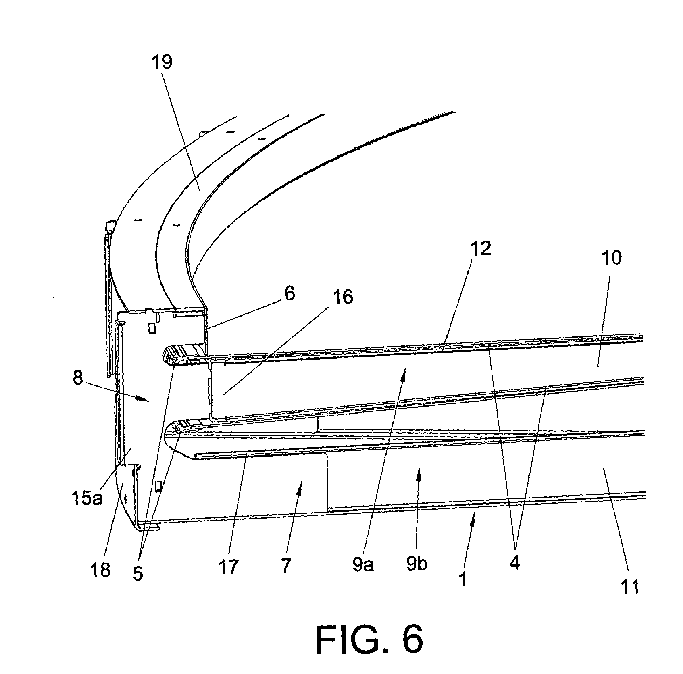

Figure 6 shows a partial perspective view of a radial section of the self-supporting frame, with the conveyor belt duly positioned and the enveloping casing duly sealed, in working position.

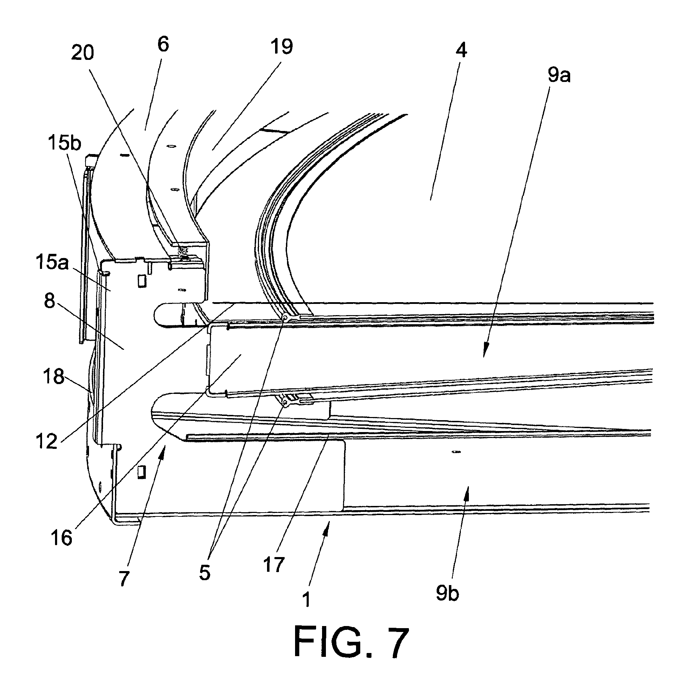

Figure 7 shows a partial perspective view of a radial section of the self-supporting frame, with the enveloping protective cover raised and the conveyor belt partially extracted from its working position to be removed.
Figure 8 shows a detailed perspective view of the retaining pin of the raising device of the enveloping casing, in a raised position.
Figure 9 shows a detailed perspective view of the retaining pin similar to the foregoing, but in its contracted working position.

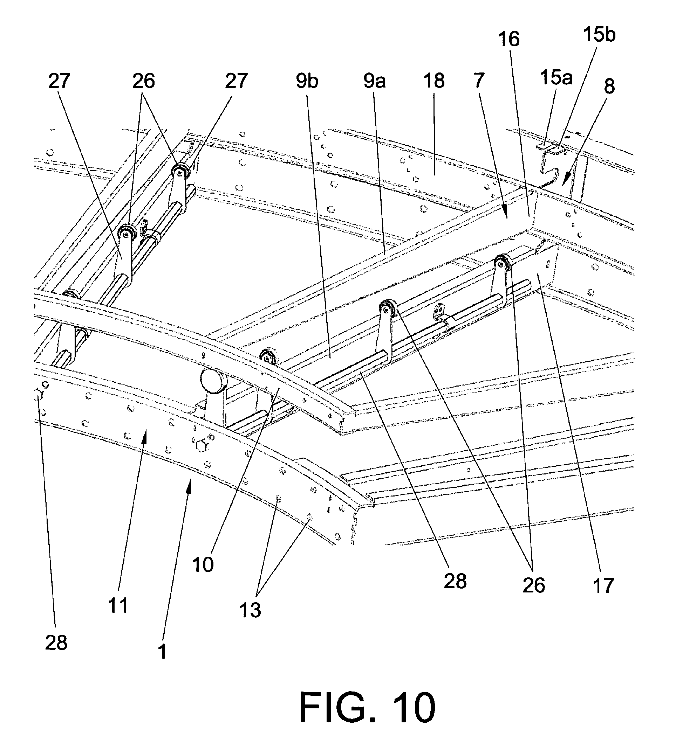

Figure 10 shows a perspective view of the frame wherein the position of the folding roller bearings for supporting and guiding the lower return run section of the conveyor belt can be observed.

### PREFERRED EMBODIMENT OF THE INVENTION

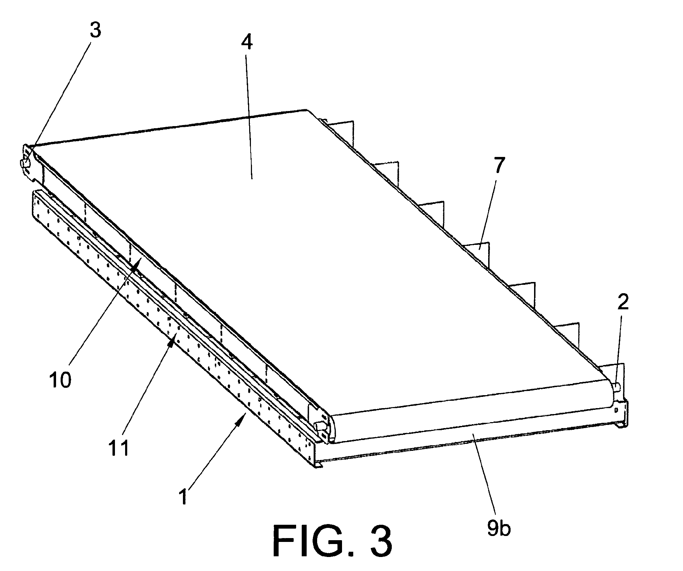

In view of the foregoing figures, a description of a preferred embodiment of the self-supporting frame for extractable conveyor belts that is the object of this invention is provided below. This preferred embodiment has been applied to a conveyor belt of curved configuration, as its geometry is more complex when designing a frame for extractable conveyor belts. Nonetheless, figure 3 represents an embodiment of the self-supporting frame applied to a straight section.

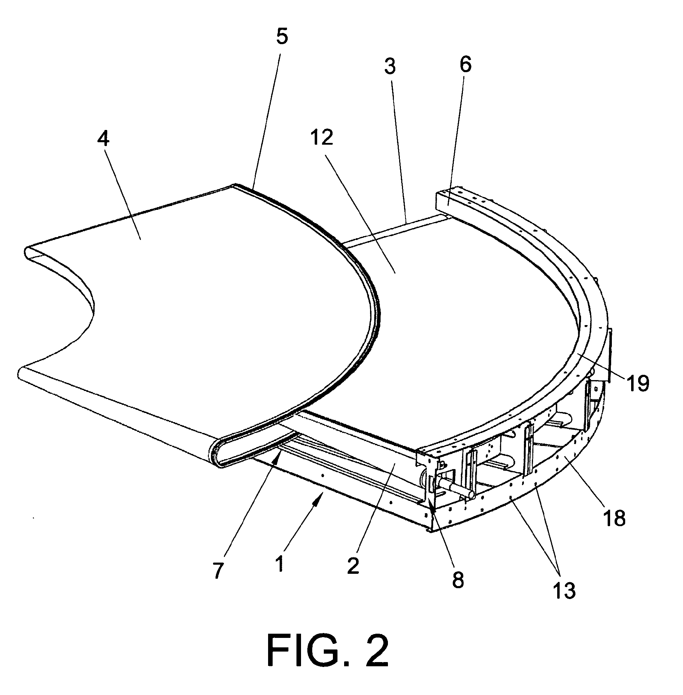

As can be observed in the different figures, the self-supporting frame (1) has two outer tread rollers, one motorised (2) and another driven (3), whereover the conveyor belt (4) slides, duly guided by means of a perimetral projection (5) and laterally shielded by an impact protector (6). The self-supporting frame (1) is composed of a plurality of C-shaped radial elements (7) structurally joined by the same number of circumferential crossbeams (18). The self-supporting frame (1) built as of the C-shaped radial elements (7) gives rise to two substructures, an upper cantilevered substructure (10) whereover the conveyor belt slides via the end tread rollers (2, 3) and another lower substructure that supports and neutralises the flexion stress caused to the upper substructure (10), in order to release said upper cantilevered structure (10) by its inner end and easily extract the conveyor belt (4), as shown in figure 2. The self-supporting frame (1) allows the free extraction of the conveyor belt (4) without having to disassemble any component.

As extraction and installation of the conveyor belt (4) is carried out laterally, the upper face of the cantilevered structure (10) is sealed by a fixed laminate cover (12), whereover the conveyor belt (4) slides. On not having to be disassembled to extract the conveyor belt, said laminate cover (12) is solidarily fixed to the upper structure in a cantilevered manner (10), thereby contributing to the structural rigidity of the self-supporting frame (1).

Thanks to the construction structure based on the C-shaped radial elements (7) of the frame (1) it is self-supporting, due to which, once fully assembled, it can be transported and integrated in the transport line run regardless of its location and support means. To this end, the lower substructure (11) of the self-supporting frame (1) has a plurality of orifices (13) destined for coupling the support elements, which in this example of embodiment are materialised in support legs (14) for resting the structure on the ground.

The union of the substructures (10, 11) that constitute the base of the self-supporting frame (1) structure is carried out by C-shaped supports composed of two parallel parts (15a, 15b) that configure the vertical section or branch (8), wherebetween a gusset (16) that configures the upper horizontal section or branch (9a) is disposed, duly joined by means of welding, and a lower strip (17) that configures the lower horizontal section or branch. The parallel parts (15a, 15b) strengthen the critical points of the C-shaped support (7), wherein the tensions to which the self-supporting frame (1) will be subject are concentrated.

On the other hand, the C-shaped radial elements or supports (7) are structurally joined on the outside by their vertical sections or branches (8) by means of circumferential crossbeams (18), in order to obtain a curved conveyor belt section.

As mentioned earlier, the conveyor belt (4) is guided by a perimetral projection (5) that is retained by roller bearing sets disposed along the outer perimeter of the self-supporting frame. In order to avoid the breakage of said roller bearing sets as a result of impacts from the articles transported on the conveyor belt (4), the frame has an impact protector consisting of an enveloping casing (19) that prevents the conveyor belt (4) from being extracted for substitution thereof. Therefore, in order to remove the conveyor belt (4), said enveloping casing (19) has a raising device that allows the passage of the perimetral projection (5) for extraction of the conveyor belt (4).

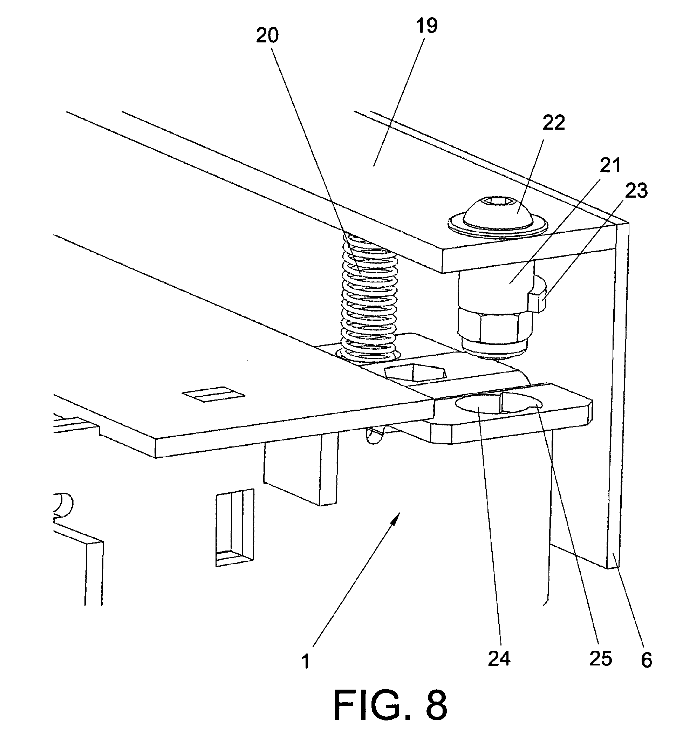

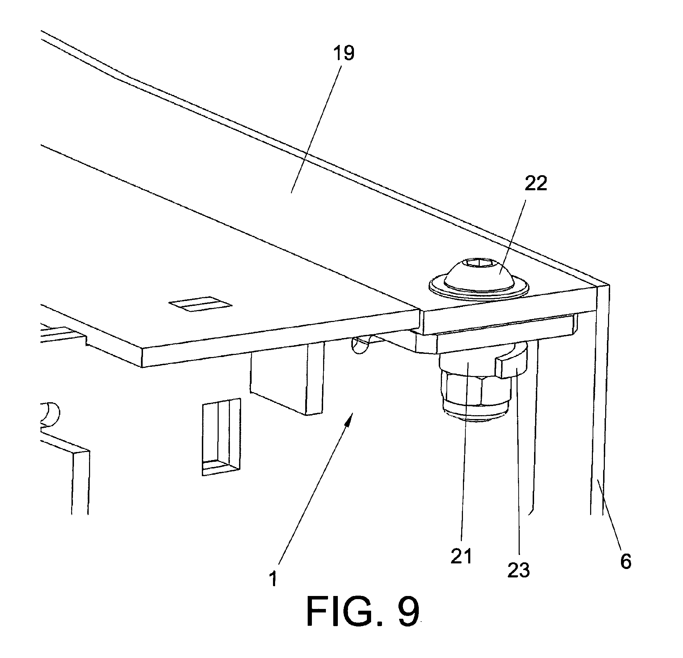

As can be observed in figures 8 and 9, the device for raising the enveloping casing (19) comprises a plurality of springs (20) that push it upwards on releasing the retaining pins (21). These pins (21) comprise a rotating rod actuated by its outer head (22) and a slightly tilted lateral flange (23), the pin (21) of which penetrates the frame structure (1) through the corresponding orifice (24), which has a notch (25) for the passage of the lateral flange (23). In this manner, by manually pressing the enveloping casing (13) the pins (21) are introduced into their respective orifices (24) and, by rotating them around their outer head (22), the enveloping casing (13) is fixed onto the frame (1). To raise it we only need to rotate the pins (21) to make the lateral flanges (23) coincide with the notches (25), releasing the pins (21) from their respective housings, and raising the enveloping casing (13) thanks to the action of the springs (20). A very important aspect of this raising device is that, during manipulation thereof, there are no loose parts that can be lost.

Finally, we must point out that the lower substructure (11) of the frame (1) comprises a plurality of roller bearings (26) for supporting and guiding the lower return run section of the conveyor belt. These roller bearings (26) prevent the lower return run section of the conveyor belt from rubbing against the lower structure (11) of the frame (1) and therefore becoming worn. To this end, in order to facilitate extraction of the conveyor belt (4), said bearing rollers (26) have been envisaged as being folding by means of arms (27) mounted on rotating axles (28) fixed to the lower structure (11) of the frame (1). The roller bearings (26) are folded by rotating the respective axles (28), said manoeuvre being performed by an operator from outside of the frame.

## Claims

1. Self-supporting frame (1) for extractable conveyor belts (4) composed of a support structure having two end tread rollers, one motorised (2) and another driven (3), whereover the conveyor belt (4) slides, duly guided, **characterised in that** the frame (1) structure comprises a plurality of C-shaped elements or supports (7), structurally joined from the outside by the vertical branches (8) and from the inside by the ends of the respective horizontal branches (9a, 9b), creating two substructures, an upper cantilevered substructure (10) whereover the conveyor belt (4) slides via the end tread rollers (2, 3) and another lower substructure (11) that supports and neutralises the flexion stress produced on the upper substructure (10), in order to release the cantilevered structure (10) by its inner end so as to easily extract the conveyor belt (4).

2. Self-supporting frame (1) for extractable conveyor belts (4), according to claim 1, **characterised in that** the upper face of the superficial cantilevered structure (10) is sealed by a fixed laminate cover (12) whereover the upper section of the conveyor belt (4) slides.

3. Self-supporting frame (1) for extractable conveyor belts (4), according to claim 1, **characterised in that** the lower structure (11) has a plurality of orifices (13) destined for coupling the frame support elements.

4. Self-supporting frame (1) for extractable (4) conveyor belts (4), according to claim 3, **characterised in that** the frame support elements are support legs (14) for resting the frame on the ground.

5. Self-supporting frame (1) for extractable conveyor belts (4), according to claim 1, **characterised in that** the C-shaped elements or supports (7) are composed by two parallel joining parts (15a, 15b) that constitute the vertical section (8) of the C-shaped support (7), wherebetween an upper gusset (16) is disposed, duly joined thereto, which constitutes the horizontal upper section (9a) of the C-shaped support (7), and a lower strip (17) that constitutes the horizontal lower section (9b) of the C-shaped support (7).

6. Self-supporting frame (1) for extractable conveyor belts (4), according to claim 1, **characterised in that** the C-shaped elements or supports (7) are structurally joined from the outside by their vertical sections (8) by means of crossbeams (18) having the same geometric configuration as the conveyor belt (4) section.

7. Self-supporting frame (1) for extractable conveyor belts (4), according to claim 1, **characterised in that** the enveloping casing (19) that constitutes the impact protector (6) has a raising device that allows the passage of the perimetral projection (5) of the conveyor belt (4) for extraction thereof.

8. Self-supporting frame (1) for extractable conveyor belts (4), according to claim 7, **characterised in that** the raising device comprises a plurality of springs (20) that push the enveloping casing (19) upwards and a plurality of retaining pins (21) that maintain it in its contracted position.

9. Self-supporting frame (1) for extractable conveyor belts (4), according to claim 8, **characterised in that** the retaining pins (21) comprise a tilted lateral flange (23), the pin of which (21) penetrates the frame (1) through the corresponding orifice (24), which has a notch (25) for the passage of the lateral flange (23).

10. Self-supporting frame (1) for extractable conveyor belts (4), according to claim 1, **characterised in that** the lower substructure (11) of the frame (1) comprises a plurality of folding roller bearings (26) to support and guide the lower return run section of the conveyor belt (4).

11. Self-supporting frame (1) for extractable conveyor belts (4), according to claim 10, **characterised in that** the roller bearings (26) are mounted by means of arms (27), on rotating axles (28) for folding thereof for the purpose of facilitating the extraction and positioning of the conveyor belt (4).
